# EUROPEAN PATENT APPLICATION

(11) **EP 4 635 284 A1**
(43) Date of publication of application: **22.10.2025**
(21) Application number: 24219200.3
(22) Date of filing: 11.12.2024
(51) Int. Cl.: A01D 34/63, A01D 34/66

(54) **LAWNMOWER KNIFE HOLDER, ROBOTIC LAWNMOWER, AND METHODS OF ATTACHING AND REMOVING KNIFE**

(30) Priority: 20.02.2024 SE 2450212
(71) Applicant: Husqvarna AB, 561 82 Huskvarna (SE)
(72) Inventor: Hedsvik, Johan, Huskvarna (SE); Johansson, Jörgen, Huskvarna (SE)

(57) **Abstract**

A lawnmower knife holder (28) comprises a knife carrier rotor (32) and a trap rotor (34). The knife carrier rotor (32) comprises a carrier rotor body (40) and set of knife pins (42a-c), each having a free end (44a-c) configured to penetrate a knife pin aperture (46) in a respective knife (30a-c). The knife carrier rotor (32) is at least partly movable in relation to the trap rotor (34) between a knife trap position, in which the free ends (44a-c) of the knife pins (42a-c) are received in the trap rotor (34) to trap the knives on the respective knife pins (42a-c), and a knife release position in which a free end (44a-c) is separated from the trap rotor (34) by a gap (72) enabling removal of a knife (30a-c) from the respective knife pin (42a-c). The knife carrier rotor (32) comprises a knife carrier rotor snap interface arrangement (48) and the trap rotor (34) comprises a trap rotor snap interface arrangement (50) configured to snap to said knife carrier rotor snap interface arrangement (48).

## Description

### Field of the invention

The present invention relates to a lawnmower knife holder, to a robotic lawnmower comprising such a lawnmower knife holder, and to methods of attaching and removing a knife to/from such a lawnmower knife holder.

### Background

Since their introduction on the market, robotic lawnmowers have facilitated lawn maintenance considerably, in particular for household gardens. Robotic lawnmowers typically have a plurality of grass cutting knives that are small and lightweight to meet safety standards. The knives are typically held by a rotating knife holder; an exemplary knife holder is described in EP3102021 A1. In order to obtain the most attractive cutting results, the knives should be as sharp as possible. On the other hand, as noted, robotic lawnmowers need to meet safety standards, and they need to be easy to handle for consumers.

### Summary

It is an object of the present invention to solve, or at least mitigate, parts or all of the above mentioned problems. To this end, according to a first aspect there is provided a lawnmower knife holder configured to be rotated about a cutter rotation axis to cut grass with at least one knife held by the lawnmower knife holder, the lawnmower knife holder comprising: a knife carrier rotor comprising a carrier rotor body and at least one knife pin extending from the carrier rotor body, the at least one knife pin having a free end configured to penetrate a knife pin aperture in a respective knife to hold said respective knife; and a trap rotor configured to receive the free end of the at least one knife pin to trap the respective knife on said at least one knife pin, between the carrier rotor body and the trap rotor, wherein the knife carrier rotor is at least partly movable in relation to the trap rotor between a knife trap position, in which the free end of the at least one knife pin is received in the trap rotor, and a knife release position, in which the free end is separated from the trap rotor by a gap enabling removal of the respective knife from the at least one knife pin, wherein the trap rotor is configured to be snap-fit to the knife carrier rotor in the knife trap position, wherein the knife carrier rotor comprises a knife carrier rotor snap interface arrangement and the trap rotor comprises a trap rotor snap interface arrangement configured to snap to said knife carrier rotor snap interface arrangement. The cutter rotation axis defines a cylindrical coordinate system, and unless specifically stated or immediately apparent that anything else is intended, any references herein to "radial", "axial" or "tangential" refer to directions defined by said cylindrical coordinate system. The snap-fit defined by the knife carrier- and trap rotor snap interface arrangements enables easy and tool-less attachment of the respective knife to the lawnmower knife holder. Thereby, the knife/knives can easily be replaced. A complicated knife replacement procedure discourages the user from replacing the knives in due time, which results in a less attractive cutting result than what could have been achieved with fresh knives. Preferably, the knife carrier- and trap rotor snap interface arrangements are also configured to be at least partly separated from each other by snap action. According to embodiments, the free end of the at least one knife pin may be received in a trap recess in the trap rotor. The trap recess may be configured as a through hole through the trap rotor; thereby, the free end of the at least one knife pin may be pushed out of the trap recess from the reverse side of the trap rotor. Alternatively, for example, the free end of the at least one knife pin may be received between a set of protrusions extending axially from the trap rotor, the protrusions defining axial stops for the knife when the knife carrier rotor is in the trap position relative to the trap rotor. Preferably, the knife is rotatable about the respective knife pin when the knife carrier rotor is in the trap position relative to the trap rotor. According to embodiments, the at least one knife pin extends substantially parallel to the cutter rotation axis, i.e. forms an angle of less than 15 degrees with the cutter rotation axis. The trap rotor may be configured as a single, integrally formed device. Alternatively, the trap rotor may consist of multiple interconnected parts. Similarly, the carrier rotor body may be configured as a single, integrally formed device provided with said one or more knife pins. Alternatively, the carrier rotor body may comprise a plurality of carrier rotor body parts which may be connected to each other, each carrier rotor body being provided with one or more respective knife pins. The at least one knife pin may be integrally formed with the carrier rotor body, or may be separately formed and attached to the carrier rotor body. According to embodiments, the knife carrier rotor snap interface arrangement may comprise a plurality of knife carrier rotor snap interfaces distributed about the cutter rotation axis. Likewise, the trap rotor snap interface arrangement may comprise a plurality of trap rotor snap interfaces distributed about the cutter rotation axis.

According to embodiments, said knife carrier rotor may comprise a plurality of knife pins, each having a free end configured to penetrate a knife pin aperture in a respective knife to hold said respective knife. The plurality of knife pins may be distributed about the cutter rotation axis and, optionally, may be distributed symmetrically about the cutter rotation axis. The plurality of knife pins may extend from said carrier rotor body. Alternatively or additionally, according to embodiments, the knife carrier rotor may comprise two or more carrier rotor bodies, each holding one or more knife pins.

According to embodiments, at least one of said carrier rotor body and said trap rotor may comprise a respective plurality of radially extending rotor arms, each holding or being configured to receive the free end of, a respective one of said knife pins. According to further embodiments, the rotor arms of the carrier rotor body or the trap rotor may be partly countersunk into, as the case may be, the other of the trap rotor and the carrier rotor body. Thereby, air turbulence and/or friction against grass, caused by the radial rotor arms, may be reduced.

According to embodiments, the trap rotor may comprise a plurality of trap recesses, each configured to receive a free end of a respective knife pin of said plurality of knife pins. Alternatively, multiple knife pins may be configured to enter a single trap recess, which may be shaped as an elongate groove extending between multiple knife pin positions, for example along a periphery of the trap rotor.

According to embodiments, the trap rotor may snap-fit to the knife carrier rotor to said trap position in a snap direction along the cutter rotation axis. Herein, "along" should be construed as forming an angle of less than 45 degrees. According to embodiments, the snap direction may be parallel to said cutter rotation axis.

According to embodiments, said knife carrier rotor snap interface arrangement may comprise a knife pin snap interface arrangement which, in turn, comprises a knife pin snap interface defined by said at least one snap pin. The knife pin snap interface may, for example, be configured as a snap protrusion or a snap recess at the free end of the knife pin. Such a protrusion or recess may additionally serve to catch the blade, and prevent it from being slung out from the lawnmower, in the event that the snap fit would be open. The trap rotor snap interface arrangement may comprise a trap rotor snap interface arranged in a trap recess in the trap rotor for receiving the free end of the knife pin. Such a trap rotor snap interface may, for example, be configured as a snap recess or snap protrusion configured to snappingly engage with a respective snap protrusion or snap recess of the free end of the knife pin. The at least one knife pin may comprise a plurality of knife pins, each comprising a respective knife pin snap interface of said knife carrier rotor snap interface arrangement. The trap rotor snap interface arrangement may comprise a plurality of trap rotor snap interfaces mating with respective knife pin snap interfaces.

According to embodiments, the knife pin snap interface may comprise one of a groove and a ridge configured to snap into engagement with the other of a groove and a ridge in a mating trap rotor snap interface of the trap rotor snap interface arrangement. For example, the snap-fit obtained by the mating knife pin snap interface and trap rotor snap interface may be an annular snap-fit, engaging by hoop strain of the ridge. According to embodiments, the knife pin snap interface may comprise the groove, and the trap rotor snap interface may comprise the ridge configured to snap into engagement with the groove.

According to embodiments, said carrier rotor body may comprise a carrier rotor body snap interface arrangement comprising one or more carrier rotor body snap interfaces, wherein said knife carrier rotor snap interface arrangement comprises said carrier rotor body snap interface arrangement. The trap rotor snap interface arrangement may comprise one or more trap rotor snap interfaces mating with the one or more carrier rotor body snap interfaces. At least one of the one or more carrier rotor body snap interfaces and the one or more trap rotor snap interfaces may comprise a cantilever hook. According to embodiments, the carrier rotor body may comprise a plurality of carrier rotor body snap interfaces, each snappingly mating with a corresponding trap rotor snap interface of the trap rotor snap interface arrangement.

According to embodiments, at least a portion of the carrier rotor body and/or at least a portion of the trap rotor may be flexible to enable said partial mobility of the knife carrier rotor in relation to the trap rotor between the knife trap position and the knife release position. Thereby, for a multiple-knife lawnmower knife holder, the knife carrier rotor and the trap rotor may be held to each other in a predetermined relationship while replacing one knife at a time. According to embodiments, one of the carrier rotor body and the trap rotor may comprise a plurality of flexible rotor arms. Alternatively or additionally, said flexible portion(s) of the carrier rotor body and/or the trap rotor may be resiliently flexible against a bias, generated by the intrinsic resilience of the flexible portion, towards the trap position. According to further embodiments, one of the carrier rotor body and the trap rotor may be rigid, thereby to providing mechanical stability to the flexible portion(s) of the other of the carrier rotor body and the trap rotor after the carrier rotor body and the trap rotor have been snapped together. According to an alternative embodiment, both the carrier rotor body and the trap rotor may be rigid. Such a carrier rotor may be particularly beneficial in an embodiment wherein the free end of the at least one knife pin remains unattached to the trap rotor in the trap position.

According to embodiments, the carrier rotor body may be made of plastic or rubber, and the at least one knife pin may be made of metal.

According to embodiments, the carrier rotor body may be attached or attachable to the trap rotor radially inside the at least one knife pin. For example, the carrier rotor body may be attached or attachable to the trap rotor via one or more carrier rotor body snap interfaces mating with one or more trap rotor snap interfaces, and/or may be axially clamped to the trap rotor at a hub.

According to embodiments, the lawnmower knife holder may be shaped such that, when in the trap position, the carrier rotor body is at least partly separated from the trap rotor, along the cutter rotation axis, by a knife passageway gap extending radially inwards from the at least one knife pin to enable the knife to rotate a full turn about the knife pin. The trap rotor may further comprise a grass outlet hole radially overlapping with the knife passageway gap. Thereby, grass build-up and compaction in the knife passageway gap is counteracted, which reduces any risk that the knife might get stuck in the knife passageway gap. Preferably, the grass outlet hole has a radial width of at least 20 mm and a tangential width of at least 30 mm.

According to embodiments, the trap rotor may be configured as a circular disc.

According to embodiments, the carrier rotor body may be shaped as a rotor body plate extending in a plane perpendicular to the cutter rotation axis.

According to a second aspect, there is provided a robotic lawnmower comprising a lawnmower knife holder as defined hereinabove. The trap rotor and/or the knife carrier rotor may be connected to a cutter motor shaft to be rotated about the cutter rotation axis. According to embodiments, the trap rotor may be rigidly connected to the cutter motor shaft, whereas the carrier rotor body may be at least partly movable in relation to the cutter motor shaft between the knife trap position and the knife release position.

According to embodiments, the robotic lawnmower may comprise a chassis, wherein the trap rotor is positioned between the chassis and the carrier rotor body.

According to embodiments, the robotic lawnmower may further comprise a skid plate suspended below the lawnmower knife holder, the skid plate being rotatably connected to the lawnmower knife holder to enable rotation of the lawnmower knife holder in relation to the skid plate about the cutter rotation axis. Thereby, friction against the grass is minimized.

According to a third aspect, there is provided a method of attaching a lawnmower knife to lawnmower knife holder, comprising: threading a free end of a knife pin of a knife carrier rotor through a knife pin aperture in the knife; receiving said free end in a trap rotor, thereby trapping the knife on the knife pin; and snap-fitting the knife carrier rotor to the trap rotor. The method is combinable with any of the embodiments of the lawnmower knife holder, as well as of the robotic lawnmower, defined hereinabove.

According to a fourth aspect, there is provided a method of removing a lawnmower knife from the knife pin of a knife carrier rotor, comprising: at least partly separating the knife carrier rotor from a trap rotor against a snap action, thereby obtaining a gap between a free end of the knife pin and the trap rotor; and removing the knife from the knife pin by passing the knife over the free end of the knife pin. According to embodiments, the knife carrier rotor may be separated from the trap rotor in a separation direction along a cutter rotation axis. The method of removing a lawnmower knife is combinable with the method of attaching a lawnmower knife defined hereinabove, as well as with any of the embodiments of the lawnmower knife holder and the robotic lawnmower defined hereinabove.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a view in perspective of a robotic lawnmower system comprising a robotic lawnmower;
Fig. 2 is a perspective view of the robotic lawnmower of Fig. 1 as seen obliquely from below;
Fig. 3 is a perspective view of a lawnmower knife holder holding a set of knives, as seen obliquely from below;
Fig. 4 is a perspective view of the lawnmower knife holder and knives of Fig. 3, as seen obliquely from above;
Fig. 5 is an exploded view, seen in perspective obliquely from above, of a grass cutter assembly of the robotic lawnmower of Fig. 2, comprising the lawnmower knife holder and knives of Fig. 3;
Fig. 6 is an exploded view, seen in perspective obliquely from below, of the grass cutter assembly of Fig. 5;
Fig. 7 is a perspective view, partly in section, of a detail of the lawnmower knife holder and one of the knives of Fig. 3;
Fig. 8 is a perspective view of the lawnmower knife holder and knives of Fig. 3, seen obliquely from below, during replacement of a knife; and
Fig. 9 is a perspective view, partly in section, of a detail of a knife carrier rotor of the lawnmower knife holder, and the knife, of Fig. 7.

All the figures are schematic, not necessarily to scale, and generally only show parts which are necessary in order to elucidate the embodiments, wherein other parts may be omitted.

### Detailed description of the exemplary embodiments

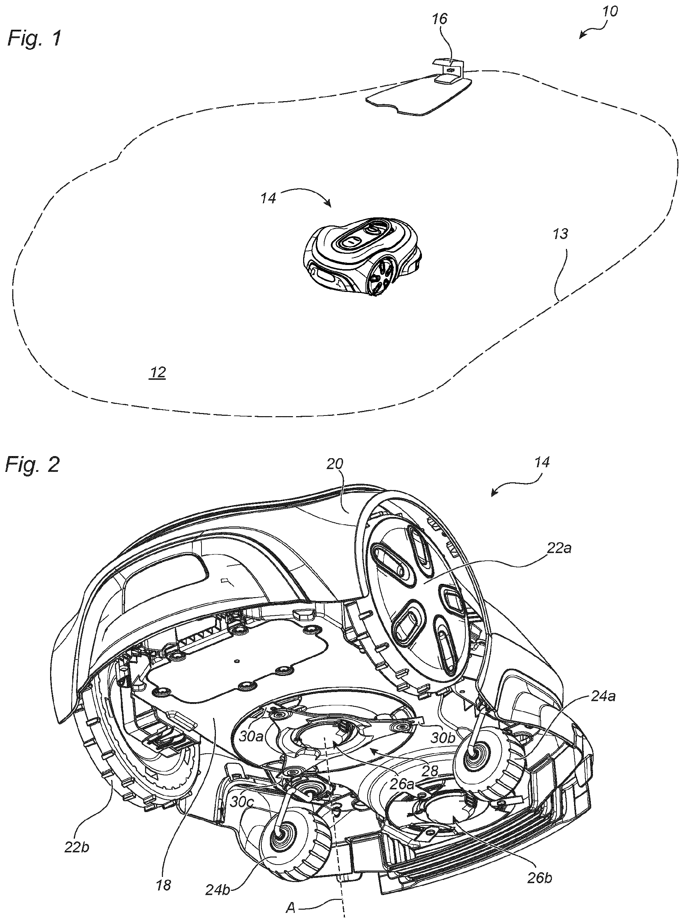

Fig. 1 schematically illustrates an overview of a robotic lawnmower system 10 configured to mow a lawn within a work area 12 such as a garden, a park, a football field or a golf court, the work area 12 being defined by a work area boundary 13. The robotic lawnmower system 10 comprises a self-propelled battery-powered robotic lawnmower 14, which is configured to autonomously navigate the work area 12 to cut grass, and a battery charging station 16. The work area boundary 13 may be defined by e.g. a boundary cable, or may be configured as a virtual perimeter, i.e. a geofence.

Fig. 2 illustrates the bottom face of the robotic lawnmower 14 in greater detail. The robotic lawnmower 14 comprises a chassis 18, and an outer shell 20 which partly covers the chassis and defines an exterior face of the robotic lawnmower 14. The chassis 18 is provided with a pair of drive wheels 22a, 22b and a pair of casters 24a, 24b, which support the robotic lawnmower 14 as it propels itself on the ground.

The robotic lawnmower 14 further comprises a grass cutting arrangement comprising a first grass cutter assembly 26a and a second grass cutter assembly 26b, wherein only the first grass cutter assembly 26a will be described in detail. It will be appreciated that the second grass cutter assembly 26b may be identical to or different from the first grass cutter 26a, as well as that that the robotic lawnmower 14 may comprise one single grass cutter assembly 26a alone. The first grass cutter assembly 26a comprises a lawnmower knife holder 28 configured to cut grass using a set of knives 30a, 30b, 30c held by the lawnmower knife holder 28. The lawnmower knife holder 28 is rotated by a cutter motor (not visible) about a cutter axis A in a manner known per se.

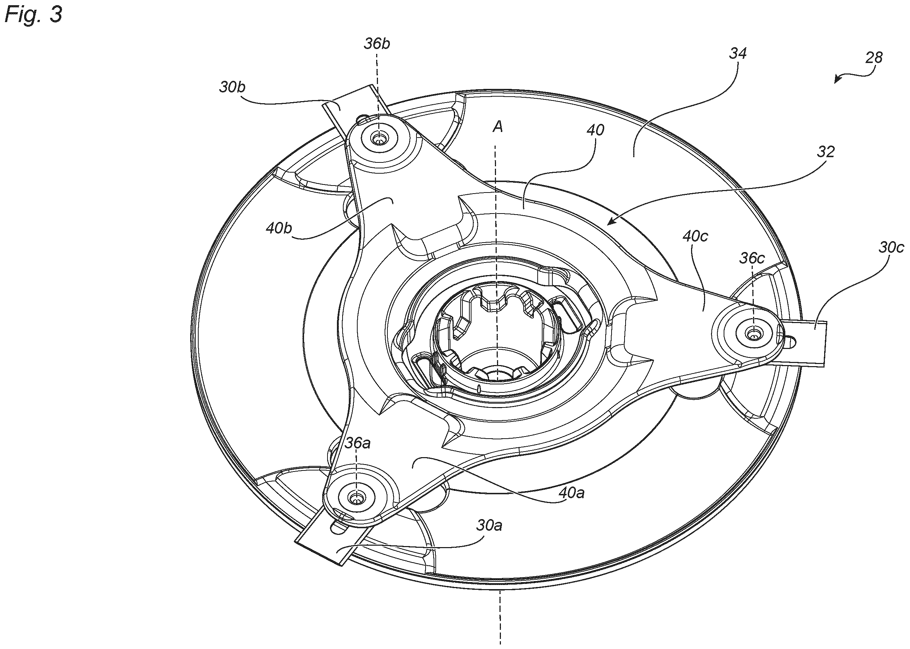

Fig. 3 illustrates the lawnmower knife holder 28 and the set of knives 30 in isolation, and as seen obliquely from below. The lawnmower knife holder 28 comprises a knife carrier rotor 32 and a trap rotor 34. The knives 30a-c are evenly distributed about the cutter rotation axis A at a radial distance from the cutter rotation axis A, and are sandwiched between the trap rotor 34 and a carrier rotor body 40 of the knife carrier rotor 32. Each knife 30a, 30b, 30c is rotatably held by the lawnmower holder 28 so as to be rotatable about a respective knife rotation axis 36a, 36b, 36c.

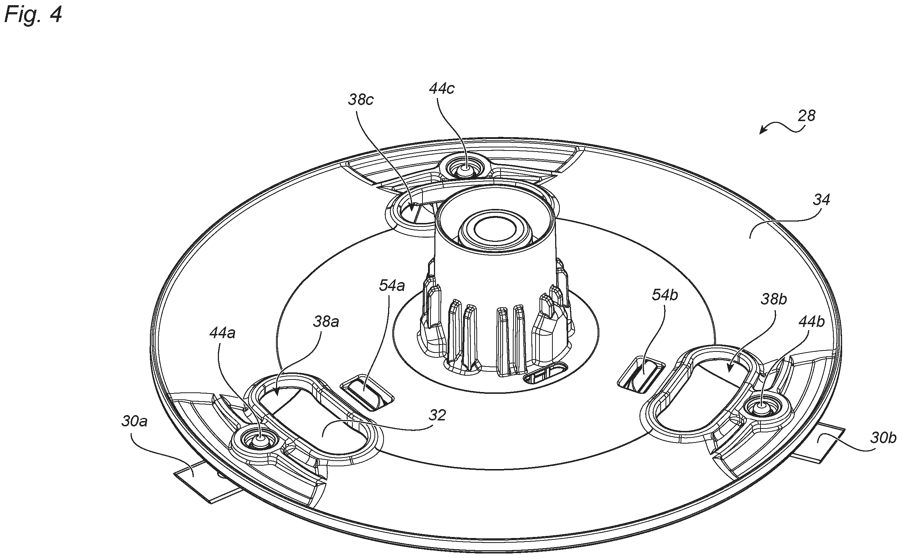

Fig. 4 illustrates the lawnmower knife holder 28 and the set of knives 30a-c as seen obliquely from above. The trap rotor 34 has the general shape of a circular disc, and the knife carrier rotor 32 is partly visible through a set of grass outlet holes 38a, 38b, 38c, the function of which will be explained further below.

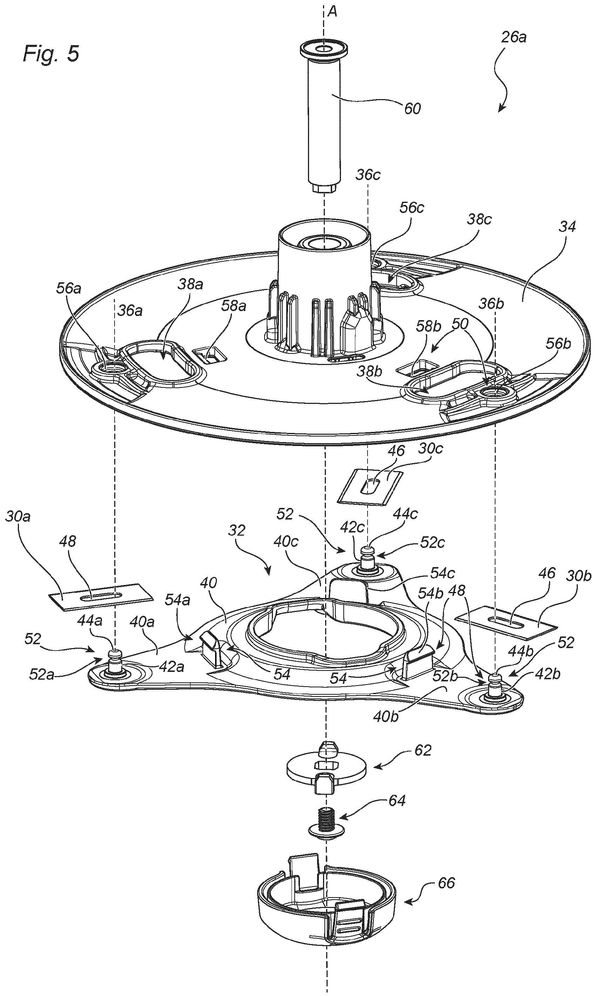

Fig. 5 is an exploded view of the first grass cutter assembly 26a as seen obliquely from above. The knife carrier rotor 32 comprises a carrier rotor body 40 made of plastic and shaped as a plate extending in a plane perpendicular to the cutter rotation axis A, and a set of knife pins 42a, 42b, 42c made of metal and extending from the carrier rotor body 40 in a direction parallel to the cutter rotation axis A. The knife pins 42a-c have respective free ends 44a-c, each configured to penetrate an elongate knife pin aperture 46 in a respective knife 30a-c to hold the respective knife 30a-c in a manner which allows the respective knife 30a-c to rotate about the respective knife pin 42a-c. Thereby, the knives 30a-c can fold radially inwards, towards the cutter rotation axis A, in case they accidentally strike an object. The carrier rotor body 40 comprises three radially extending rotor arms 40a, 40b, 40c, each holding a respective one of the knife pins 42a, 42b, 42c. Referring back to Fig. 3, the trap rotor 34 has a substantially flat bottom face which faces the knife carrier rotor 32, and the knife carrier rotor arms 40a-c protrude axially downwards from the trap rotor. According to an alternative embodiment (not illustrated), the rotor arms 40a-c of the carrier rotor body 40 may be partly countersunk into a mating structure on the bottom face of the trap rotor 34 to minimize any air turbulence and friction against grass which may be caused by the radial rotor arms 40a-c. In a still further alternative embodiment, a skid plate (not illustrated) may be rotatably connected to the lawnmower knife holder 28, below the knife carrier rotor 32, such that the lawnmower knife holder 28 can be rotated without rotating the skid plate. Such skid plates, which shield the rotating knife holder 28 from contact with the grass while cutting, are known per se.

Referring again to Fig. 5, the knife carrier rotor 32 is configured to be snap-fit to the trap rotor 34 in a snap direction parallel to the cutter rotation axis A. For the purpose, the knife carrier rotor 32 comprises a knife carrier rotor snap interface arrangement 48, and the trap rotor 34 comprises a trap rotor snap interface arrangement 50 mating with the knife carrier rotor snap interface arrangement 48, and configured to snap thereto.

The knife carrier rotor snap interface arrangement 48 comprises two functionally slightly different sub-arrangements of snap interfaces, namely a knife pin snap interface arrangement 52 and a carrier rotor body snap interface arrangement 54. The knife pin snap interface arrangement 52 comprises a set of knife pin snap interfaces 52a-c formed at the distal ends 44b of the knife pins 42a-c, whereas the carrier rotor body snap interface arrangement 54 comprises a set of carrier rotor body snap interfaces 54a-c configured as cantilever hooks integrally formed with the carrier rotor body 40 in register with respective ones of the rotor arms 40a-c. The carrier rotor body snap interfaces 54a-c are positioned radially inside the knife pin snap interfaces 52a-c.

When the knife carrier rotor 32 and the trap rotor 34 are snapped together, each rotor body arm 40a-c is axially separated from the trap rotor 34 by a knife passageway gap extending radially inwards from the respective knife pin 42a-c to enable the respective knife 30a-c to rotate a full turn about the knife pin 42a-c. In the illustrated example, the knife pin snap interfaces 52a-c and carrier rotor body snap interfaces 54a-c hold the upper faces of the carrier rotor arms 40a-c at a distance from the trap rotor 34 to define the respective knife passageway gaps. Grass outlet holes 38a-c radially overlap with the knife passageway gap, such that build-up and compaction of grass in the knife passageway gap is counteracted.

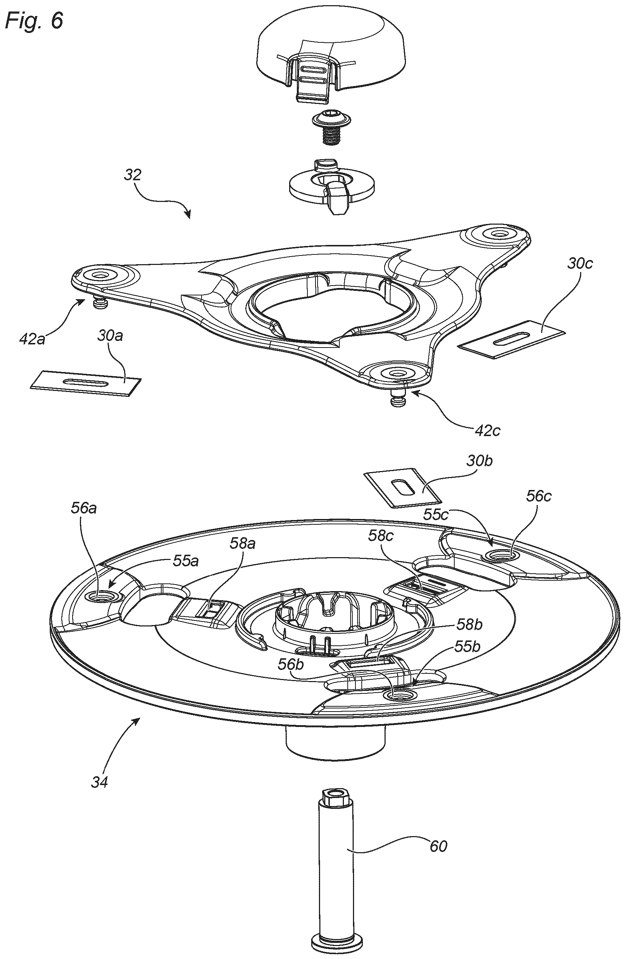

Fig. 6 is an exploded view of the first grass cutter assembly 26a as seen obliquely from below. The trap rotor 34 comprises a set of trap recesses 55a, 55b, 55c, each configured to receive a free end 44a, 44b, 44c (Fig. 5) of a respective one of the knife pins 42a, 42b, 42c when the knife carrier rotor 32 and the trap rotor 34 are snapped together. When the free ends 44a-44c are received in the respective trap recesses 55a-c, the axial face of the trap rotor 34 adjacent to the respective trap recesses 55a-c defines an axial stop for the respective knives 30a-c, such that the knives 30a-c are trapped on their respective knife pins 42a-c. Accordingly, the mutual positional relationship between the knife carrier rotor 32 and the trap rotor 34 illustrated in Figs 3 and 4, in which the knife pins 42a-c (Fig. 5) penetrate into the trap recesses 55a-c (Fig. 6), may be referred to as a knife trap position.

The trap recesses 55a-c also double as a first set of trap rotor snap interfaces 56a-c of the trap rotor snap interface arrangement 50 (Fig. 5), because they are shaped to mate with, and snap to, respective ones of the knife pin snap interfaces 52a-c (Fig. 5). A second set of trap rotor snap interfaces 58a-c of the trap rotor snap interface arrangement 50 (Fig. 5) is defined by apertures configured to receive, and snap to, respective ones of the carrier rotor body snap interfaces 54a-c (Fig. 5).

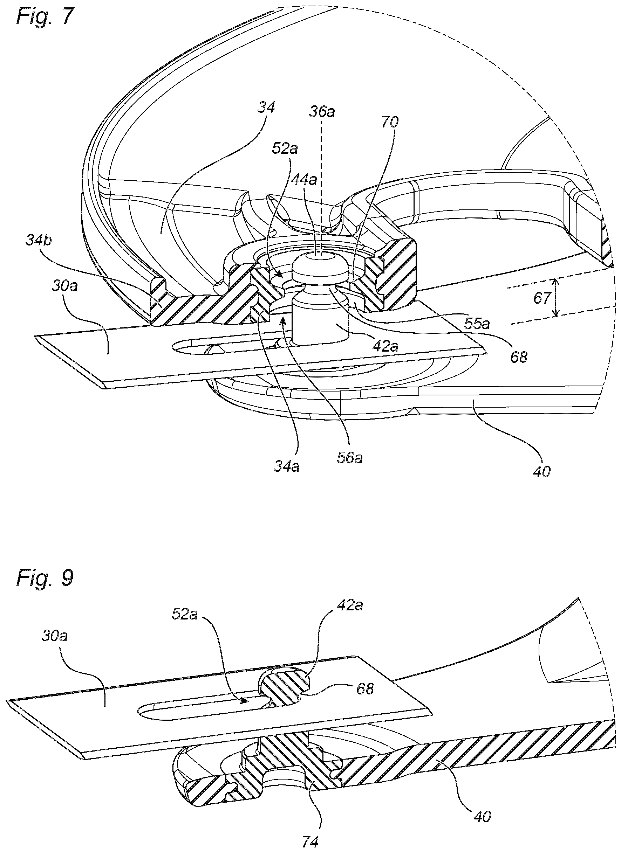

Fig. 7 illustrates the snap connection between a first knife pin snap interface 52a and a respective trap rotor snap interface 56a. It will be appreciated that the other knife pin snap interfaces 52b, 52c and the respective trap rotor snap interfaces 56b, 56c may be similar. The view illustrates the trap rotor 34 in a section following a radial plane comprising the cutter rotation axis A (Fig. 3) and the respective knife rotation axis 36a, whereas the other components are not illustrated in section. A single knife 30a is trapped on the respective knife pin 42a, sandwiched between the trap rotor 34 and the carrier rotor body 40. The knife passageway gap, enabling the knife 30a to pivot about the knife pin 42a, is indicated by reference sign 67.

As illustrated, the knife pin snap interface 52a comprises a snap recess 68 configured as a groove extending circumferentially knife pin 42a. The trap rotor snap interface 56a comprises a snap protrusion 70 configured as a ridge extending circumferentially about the inner perimeter of the respective trap recess 55a. The free end 44a of the knife pin 42a is tapered to facilitate pressing the knife pin snap interface 52a, against hoop strain generated in the ridge defined by the snap protrusion 70, into interlocking engagement with the trap rotor interface 56a. Each of the trap rotor snap interfaces 56a-c, in Fig. 7 represented by the trap rotor snap interface 56a, comprises a respective metal insert 34a, comprising the snap protrusion 70, moulded into a plastic trap rotor body 34b.

The knife pin snap interface 52a and the respective trap rotor snap interface 56a are also configured to be separated from each other by snap action, by simply pulling the knife pin 42a out of the trap recess 55a by a force exceeding the interlock force defined by the hoop strain. In the illustrated embodiment, the trap recess 55a is also configured as a through hole through the trap rotor, such that the free end 44a of the knife pin 42a can be pushed out of its interlocking engagement with the trap rotor 34 from the reverse side of the trap rotor 34, opposite to the knife carrier rotor 32.

By unsnapping the knife pin snap interface 52a from the respective trap rotor snap interface 56a, the free end 44a of the knife pin 42a can separated from the trap rotor 34 by a gap enabling removal of the knife 30a from the respective knife pin 42a. Accordingly, such a mutual positional relationship between the knife carrier rotor 32 and the trap rotor 34, in which the free end 44a of the knife pin 42a is separated from the trap rotor 34 by a gap enabling removal of the knife 30a from the respective knife pin 42a, may be referred to as a knife release position.

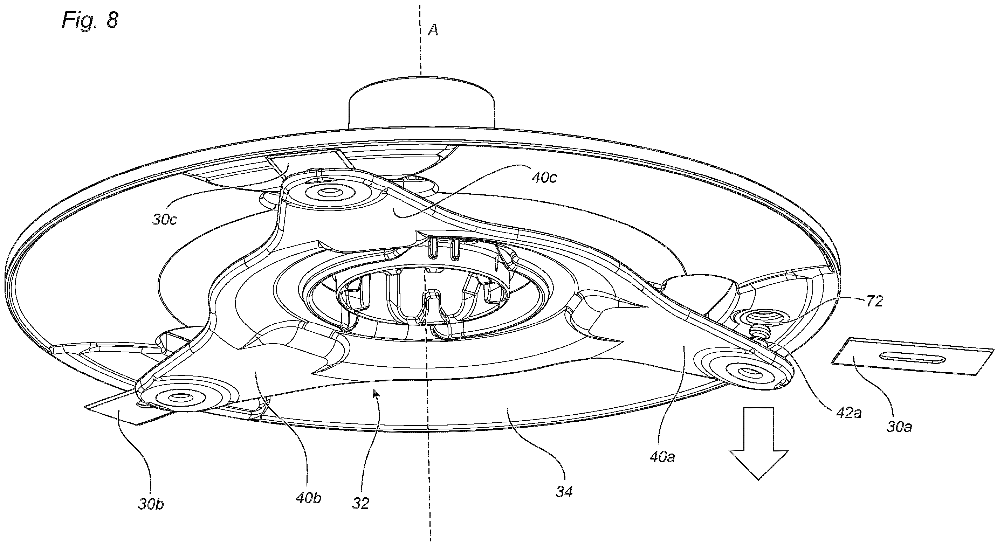

Fig. 8 illustrates the trap rotor 34 and knife carrier rotor 32 in such a knife release position, wherein the knife separation gap between the free end 44a (Fig. 5) of the knife pin 42a and the trap rotor 34 is indicated by reference sign 72. The rotor arms 40a-c (Fig. 5) of the carrier rotor body 40 are resiliently flexible along the axial direction defined by the cutter rotation axis A, such that they can be flexed in the direction of the arrow shown below rotor arm 40a, while the radially central parts of the carrier rotor body 40, adjacent to the hub, remain attached to the trap rotor 34 via the carrier rotor body snap interface arrangement 54 (Fig. 5). The knives 30a-c can easily be replaced without any tools, all at once or one knife after the other, by snapping loose the respective knife pin snap interfaces 52a-c (Fig. 5) from the trap rotor 34, replacing the knives 30a-c on the respective knife pins 42a-c, and resnapping the knife pin snap interfaces 52a-c into interlocking engagement with the trap rotor 34. In case any of the knife pin snap interfaces 52a-c (Fig. 5) are not properly snapped to the respective trap rotor interfaces 56a-c (Fig. 5), the intrinsic resilience of the rotor arms 40a-c will nonetheless act to close the knife separation gap 72, and press the free ends 44a-c of the knife pins 42a-c at least partly into the respective trap recesses 55a-c (Fig. 6) of the trap rotor 34.

Fig. 9 illustrates a situation in which a knife pin snap interface 52a has not been properly attached to the respective trap rotor snap interface 56a. Due to the centrifugal force acting on the knife 30a away from the cutter rotation axis A (Fig. 1), the knife 30a gets caught in the snap recess 68 of the knife pin 42a and is not slung away. The section of Fig. 9 also illustrates that each of the knife pins 42a-c, in Fig. 9 represented by the knife pin 42a, is configured as a metal pin comprising a metal anchor 74 moulded into the plastic of the carrier rotor body 40.

The invention has mainly been described above with reference to a few embodiments. However, as is readily appreciated by a person skilled in the art, other embodiments than the ones disclosed above are equally possible within the scope of the invention, as defined by the appended patent claims. For example, a composite lawnmower knife holder comprising a lower knife carrier provided with fixedly attached knife pins, and an upper trap rotor receiving the knife pins, has been described. The knife pins may equally well be fixedly attached to the upper rotor, and received by the lower rotor. In such an embodiment, the upper rotor would operate as a knife carrier rotor, and the lower rotor would operate as a trap rotor. The knife carrier rotor and the trap rotor have been described as being separate components. Alternatively, both the knife carrier rotor and the trap rotor may be defined by different parts of a single, coherent element. The knife pins do not need to be provided with knife pin snap interfaces. In order to hold the knives to the respective knife pins, it is sufficient that the free ends of the knife pins are received in the trap rotor, whereas the snap interfaces interlocking the knife carrier rotor and the trap rotor may be arranged at other locations than specifically on the knife pins. In the claims, the word "comprising" does not exclude other elements or steps, and the indefinite article "a" or "an" does not exclude a plurality.

### Examples of the present disclosure include:

1. A lawnmower knife holder (28) configured to be rotated about a cutter rotation axis (A) to cut grass with at least one knife (30a-c) held by the lawnmower knife holder (28), the lawnmower knife holder (28) comprising:
   a knife carrier rotor (32) comprising a carrier rotor body (40) and at least one knife pin (42a-c) extending from the carrier rotor body (40), the at least one knife pin (42a-c) having a free end (44a-c) configured to penetrate a knife pin aperture (46) in a respective knife (30a-c) to hold said respective knife (30a-c); and
   a trap rotor (34) configured to receive the free end (44a-c) of the at least one knife pin (42a-c) to trap the respective knife on said at least one knife pin (42a-c), between the carrier rotor body (40) and the trap rotor (34), wherein the knife carrier rotor (32) is at least partly movable in relation to the trap rotor (34) between a knife trap position, in which the free end (44a-c) of the at least one knife pin (42a-c) is received in the trap rotor (34), and a knife release position, in which the free end (44a-c) is separated from the trap rotor (34) by a gap (72) enabling removal of the respective knife (30a-c) from the at least one knife pin (42a-c), **characterized in that**
   the trap rotor (34) is configured to be snap-fit to the knife carrier rotor (32) in the knife trap position, wherein the knife carrier rotor (32) comprises a knife carrier rotor snap interface arrangement (48) and the trap rotor (34) comprises a trap rotor snap interface arrangement (50) configured to snap to said knife carrier rotor snap interface arrangement (48).
2. The lawnmower knife holder (28) according to example 1, wherein said knife carrier rotor (32) comprises a plurality of knife pins (42a-c), each having a free end (44a-c) configured to penetrate a knife pin aperture (46) in a respective knife (30a-c) to hold said respective knife (30a-c).
3. The lawnmower knife holder (28) according to any of the preceding examples, wherein at least one of said carrier rotor body (40) and said trap rotor (34) comprises a respective plurality of radially extending rotor arms (40a-c), each holding, or being configured to receive the free end (44a-c) of, a respective one of said knife pins (42a-c).
4. The lawnmower knife holder (28) according to any of the examples 2-3, wherein the trap rotor (34) comprises a plurality of trap recesses (55a-c), each configured to receive a free end (44a-c) of a respective knife pin (42a-c) of said plurality of knife pins (42a-c).
5. The lawnmower knife holder (28) according to any of the preceding examples, wherein the trap rotor (34) is snap-fit to the knife carrier rotor (32) to said trap position in a snap direction along the cutter rotation axis (A).
6. The lawnmower knife holder (28) according to any of the preceding examples, wherein said knife carrier rotor snap interface arrangement (48) comprises a knife pin snap interface arrangement (52), which comprises a knife pin snap interface (52a-c) defined by said at least one snap pin (42a-c).
7. The lawnmower knife holder (28) according to example 6, wherein the knife pin snap interface (52a-c) comprises one of a groove (68) and a ridge (70) configured to snap into engagement with the other of a groove (68) and a ridge (70) in a mating trap rotor snap interface (56a-c) of the trap rotor snap interface arrangement (50).
8. The lawnmower knife holder (28) according to any of the preceding examples, wherein said carrier rotor body (40) comprises a carrier rotor body snap interface arrangement (54) comprising one or more carrier rotor body snap interfaces (54a-c), wherein said knife carrier rotor snap interface arrangement (48) comprises said carrier rotor body snap interface arrangement (54).
9. The lawnmower knife holder (28) according to any of the preceding examples, wherein at least a portion (40a-c) of the carrier rotor body (40) and/or at least a portion of the trap rotor (34) is flexible to enable said partial mobility of the knife carrier rotor (32) in relation to the trap rotor (34) between the knife trap position and the knife release position.
10. The lawnmower knife holder (28) according to example 9, wherein the carrier rotor body (40) is made of plastic or rubber, and the at least one knife pin (42a-c) is made of metal.
11.The lawnmower knife holder (28) according to any of the preceding examples, wherein the carrier rotor body (40) is attached or attachable to the trap rotor (34) radially inside the at least one knife pin (42a-c).
12. The lawnmower knife holder (28) according to any of the preceding examples, wherein, when in the trap position, the carrier rotor body (40) is at least partly separated from the trap rotor (34), along the cutter rotation axis (A), by a knife passageway gap (67) extending radially inwards from the at least one knife pin (42a-c) to enable the respective knife (30a-c) to rotate a full turn about the knife pin (42a-c).
13. The lawnmower knife holder (28) according to example 12, wherein the trap rotor (34) comprises a grass outlet hole (38a-c) radially overlapping with the knife passageway gap (67).
14. The lawnmower knife holder (28) according to any of the preceding examples, wherein the trap rotor (34) is configured as a circular disc.
15. The lawnmower knife holder (28) according to any of the preceding examples, wherein the carrier rotor body (40) is shaped as a rotor body plate extending in a plane perpendicular to the cutter rotation axis (A).
16.A robotic lawnmower (14) comprising a lawnmower knife holder (28) according to any of the preceding examples.
17. The robotic lawnmower (14) according to example 16, wherein the robotic lawnmower comprises a chassis (18), and the trap rotor (34) is positioned axially between the chassis (18) and the carrier rotor body (40).
18. The robotic lawnmower according to any of the examples 16-17, wherein the robotic lawnmower (14) further comprises a skid plate suspended below the lawnmower knife holder (28), the skid plate being rotatably connected to the lawnmower knife holder (28) to enable rotation of the lawnmower knife holder (28) in relation to the skid plate about the cutter rotation axis (A).
19. A method of attaching a lawnmower knife to lawnmower knife holder (28), comprising:
   threading a free end (44a-c) of a knife pin (42a-c) of a knife carrier rotor (32) through a knife pin aperture (46) in the knife (30a-c);
   receiving said free end (44a-c) in a trap rotor (34), thereby trapping the knife (30a-c) on the knife pin (42a-c); and
   snap-fitting the knife carrier rotor (32) to the trap rotor (34).
20. A method of removing a lawnmower knife (30a-c) from the knife pin (42a-c) of a knife carrier rotor (32), comprising:
   at least partly separating the knife carrier rotor (32) from a trap rotor (34) against a snap action, thereby obtaining a gap (72) between a free end (44a) of the knife pin (42a) and the trap rotor (34); and
   removing the knife (30a-c) from the knife pin (42a-c) by passing the knife (30a-c) over the free end (44a-c) of the knife pin (42a-c).

## Claims

1. A lawnmower knife holder (28) configured to be rotated about a cutter rotation axis (A) to cut grass with at least one knife (30a-c) held by the lawnmower knife holder (28), the lawnmower knife holder (28) comprising:
a knife carrier rotor (32) comprising a carrier rotor body (40) and at least one knife pin (42a-c) extending from the carrier rotor body (40), the at least one knife pin (42a-c) having a free end (44a-c) configured to penetrate a knife pin aperture (46) in a respective knife (30a-c) to hold said respective knife (30a-c); and
a trap rotor (34) configured to receive the free end (44a-c) of the at least one knife pin (42a-c) to trap the respective knife on said at least one knife pin (42a-c), between the carrier rotor body (40) and the trap rotor (34), wherein the knife carrier rotor (32) is at least partly movable in relation to the trap rotor (34) between a knife trap position, in which the free end (44a-c) of the at least one knife pin (42a-c) is received in the trap rotor (34), and a knife release position, in which the free end (44a-c) is separated from the trap rotor (34) by a gap (72) enabling removal of the respective knife (30a-c) from the at least one knife pin (42a-c), **characterized in that**
the trap rotor (34) is configured to be snap-fit to the knife carrier rotor (32) in the knife trap position, wherein the knife carrier rotor (32) comprises a knife carrier rotor snap interface arrangement (48) and the trap rotor (34) comprises a trap rotor snap interface arrangement (50) configured to snap to said knife carrier rotor snap interface arrangement (48).

2. The lawnmower knife holder (28) according to claim 1, wherein said knife carrier rotor (32) comprises a plurality of knife pins (42a-c), each having a free end (44a-c) configured to penetrate a knife pin aperture (46) in a respective knife (30a-c) to hold said respective knife (30a-c).

3. The lawnmower knife holder (28) according to any of the preceding claims, wherein at least one of said carrier rotor body (40) and said trap rotor (34) comprises a respective plurality of radially extending rotor arms (40a-c), each holding, or being configured to receive the free end (44a-c) of, a respective one of said knife pins (42a-c).

4. The lawnmower knife holder (28) according to any of the claims 2-3, wherein the trap rotor (34) comprises a plurality of trap recesses (55a-c), each configured to receive a free end (44a-c) of a respective knife pin (42a-c) of said plurality of knife pins (42a-c).

5. The lawnmower knife holder (28) according to any of the preceding claims, wherein the trap rotor (34) is snap-fit to the knife carrier rotor (32) to said trap position in a snap direction along the cutter rotation axis (A).

6. The lawnmower knife holder (28) according to any of the preceding claims, wherein said knife carrier rotor snap interface arrangement (48) comprises a knife pin snap interface arrangement (52), which comprises a knife pin snap interface (52a-c) defined by said at least one snap pin (42a-c).

7. The lawnmower knife holder (28) according to claim 6, wherein the knife pin snap interface (52a-c) comprises one of a groove (68) and a ridge (70) configured to snap into engagement with the other of a groove (68) and a ridge (70) in a mating trap rotor snap interface (56a-c) of the trap rotor snap interface arrangement (50).

8. The lawnmower knife holder (28) according to any of the preceding claims, wherein said carrier rotor body (40) comprises a carrier rotor body snap interface arrangement (54) comprising one or more carrier rotor body snap interfaces (54a-c), wherein said knife carrier rotor snap interface arrangement (48) comprises said carrier rotor body snap interface arrangement (54).

9. The lawnmower knife holder (28) according to any of the preceding claims, wherein at least a portion (40a-c) of the carrier rotor body (40) and/or at least a portion of the trap rotor (34) is flexible to enable said partial mobility of the knife carrier rotor (32) in relation to the trap rotor (34) between the knife trap position and the knife release position.

10. The lawnmower knife holder (28) according to any of the preceding claims, wherein the carrier rotor body (40) is attached or attachable to the trap rotor (34) radially inside the at least one knife pin (42a-c).

11. The lawnmower knife holder (28) according to any of the preceding claims, wherein, when in the trap position, the carrier rotor body (40) is at least partly separated from the trap rotor (34), along the cutter rotation axis (A), by a knife passageway gap (67) extending radially inwards from the at least one knife pin (42a-c) to enable the respective knife (30a-c) to rotate a full turn about the knife pin (42a-c).

12. The lawnmower knife holder (28) according to claim 11, wherein the trap rotor (34) comprises a grass outlet hole (38a-c) radially overlapping with the knife passageway gap (67).

13. A robotic lawnmower (14) comprising a lawnmower knife holder (28) according to any of the preceding claims.

14. The robotic lawnmower according to claim 13, wherein the robotic lawnmower (14) further comprises a skid plate suspended below the lawnmower knife holder (28), the skid plate being rotatably connected to the lawnmower knife holder (28) to enable rotation of the lawnmower knife holder (28) in relation to the skid plate about the cutter rotation axis (A).

15. A method of attaching a lawnmower knife to lawnmower knife holder (28), comprising:
threading a free end (44a-c) of a knife pin (42a-c) of a knife carrier rotor (32) through a knife pin aperture (46) in the knife (30a-c);
receiving said free end (44a-c) in a trap rotor (34), thereby trapping the knife (30a-c) on the knife pin (42a-c); and
snap-fitting the knife carrier rotor (32) to the trap rotor (34).
